# EUROPEAN PATENT SPECIFICATION

(11) **EP 3 500 504 B1**
(45) Date of publication and mention of the grant of the patent: **21.10.2020**
(21) Application number: 17748504.2
(22) Date of filing: 08.08.2017
(51) Int. Cl.: B65D 75/58, B65D 85/804, A47J 31/40, A47J 31/36, A47J 31/34

(54) **FITMENT ASSEMBLY FOR FOOD OR BEVERAGE CONTAINERS**
EINBAUANORDNUNG FÜR LEBENSMITTEL- ODER GETRÄNKEBEHÄLTER
ENSEMBLE ACCESSOIRE POUR RÉCIPIENTS DESTINÉS À DES ALIMENTS OU DES BOISSONS

(30) Priority: 16.08.2016 EP 16184302
(43) Date of publication of application: 26.06.2019
(73) Proprietor: Société des Produits Nestlé S.A., 1800 Vevey (CH)
(72) Inventor: JARISCH, Christian, 1095 Lutry (CH); TALON, Christian, 1134 Vufflens-le-Château (CH); HEYDEL, Christophe Sébastien Paul, 2025 Chez-Le-Bart (CH); PELLEGRINI, Stéphane, 25160 Montperreux (FR); DENISART, Jean-Luc, 1096 Cully (CH); BAENNINGER, Mr. Philippe, 1066 Epalinges (CH); BONACCI, Enzo, 1073 Savigny (CH); VERETTAS, Irène, 1376 Goumoëns la ville (CH)
(74) Representative: Navarro Fernández, Maria Isabel
(86) International application number: PCT/EP2017/070040
(87) International publication number: WO 2018/033431

(56) References cited:
- WO-A1-99/05036
- WO-A1-2015/132320

## Description

### Field of the invention

The present invention relates to a fitment assembly for being used with food or beverage containers; in particular the invention relates to a fitment assembly that can move and adopt multiple orientations or positioning within the food or beverage container.

### Background of the invention

Preparing beverages by introducing a capsule containing a food or beverage ingredient, such as ground coffee or instant coffee, in a beverage dispensing machine and injecting water into the capsule is known in the state of the art: the beverage or food ingredient is typically extracted or dissolved into water to form the beverage or the desired final product, which flows out of the capsule through a suitable outlet.

As such, different capsules have been developed in the past, these capsules being at least differentiated by the nature of the capsule body used for storing the food or the beverage ingredient. While most of the capsules are made of a rigid body or semi-rigid body, typically made though injection moulding or thermoforming, flexible types of packs can be made out of foil materials. Flexible packs have generally the advantage to semi-rigid and rigid capsules that less amount of material is used to pack the product which leads to overall less production cost, to lower life cycle impact shown in several life-cycle assessments and to advantages on the part of the user, who will need less available space for storing these packs, as they are more compact.

It is known in the state of the art, for example as per document WO 99/05044, a flexible beverage-producing sachet comprising a beverage ingredient in a volume formed by bonding two laminates at their edges, having a base seam into which a conduit of rigid plastics is bonded. An inlet nozzle is provided at the top of the resulting sachet for introducing water that is mixed with the beverage or food ingredient inside the inner volume of the sachet, the beverage produced being then evacuated through a beverage outlet arranged at the bottom of the pack, where closing means are provided, such that the closing means are adapted to open under pressure when pressurized water is introduced into the sachet, allowing the beverage to evacuate through the beverage outlet. However, this configuration presents important drawbacks for the consumer: the opening of the closing means is obtained by increase of pressure inside the sachet. Yet this pressure increase is not recommended for the preparation of some beverages because it creates bubbles at the surface of the beverage, for example this would not be desired for the preparation of tea. Besides, there exists the risk for the user that the packages may not rupture at the desired pressure, and that they would finally open up in an uncontrollable explosion. For this reason the apparatus where the sachet is processed needs to comprise means for totally enclosing the sachet in the machine during beverage preparation in order to avoid damages for the consumer. Such flexible beverage-producing sachets as described do not therefore allow a proper control of the insertion of water in the inner volume, and neither a proper control of the outlet for delivering the beverage prepared inside. Therefore, it would be desirable to have a flexible sachet that allows this specific and good regulated control of the inlet and of the outlet parts.

Another drawback of these known sachets is that the inlet nozzle introduces water in the pack always according to the same vertical top-down orientation in the sachet. Therefore, all the beverages are produced according to the same process inside the sachet. Yet depending on the nature of the beverage ingredient and the desired beverage the beverage ingredient should be processed differently. It would thus also be very advantageous to provide a sachet where the inlet of the fluid and the outlet of the prepared beverages are differently configured according to the type of product or beverage that is prepared inside.

Other problems of existing pouches in the state of the art are for example that, when having a powder ingredient in its inner volume that is diluted or processed in order to prepare an appropriate beverage, sometimes powder starts to be dispensed without the product having been properly prepared or diluted: avoiding this would also be a main advantage of a sachet or pouch.

Another disadvantage of existing pouches or sachets is that, when the food product or beverage has been prepared and the sachet is removed from the machine, in most of the cases, because the outlet through which the product is dispensed still remains open, dripping of the remaining product inside occurs.

Document WO2015/132320A1 discloses a pack having an inner volume with a food or beverage ingredient to produce a beverage. The pack comprises at least one inlet for introducing water inside and at least one outlet for delivering the beverage, arranged in an insert positioned at the bottom of the pack, the insert further comprising a centering hole to correctly position the pack in the machine.

Therefore, it would be desirable to provide a flexible pack for preparing food or beverage products which addresses the problems and drawbacks in the state of the art.

The present invention comes to provide a solution to the above-described needs, as it will be further explained. The invention also aims at other objects and particularly at the solution of other problems as will appear in the rest of the present description.

### Summary of the invention

According to a first aspect, the invention relates to a fitment assembly for one or a plurality of food or beverage containers, each container comprising at least one ingredient for the preparation of a food or beverage product, the fitment assembly comprising at least one fluid inlet connected to the inner volume of the container through at least one injection hole through which a fluid can be supplied into the food or beverage containers, and at least one dispensing outlet through which the food or beverage product is dispensed. The fitment assembly further comprises two parts relatively moveable with respect to each other such that this relative movement opens or closes the communication of the inner volume of the containers with two apertures allowing that the prepared beverage flows through dedicated channels in the fitment assembly directing the beverage towards the dispensing outlet.

The fitment assembly typically comprises a primary part stationary and a secondary part substantially vertically displaceable with respect to the primary part.

Typically, the fluid inlet is arranged in the primary part and communicates through an injection hole with the inner volume of the container.

In an embodiment of the invention, the primary part comprises two fluid inlets, each communicating through a respective injection hole with the inner volume of the container, sequentially and/or simultaneously actuated as a function of the type of product prepared. Typically, the fluid inlets are reversibly positioned.

The fitment assembly of the invention can also comprise a separating wall to allow connection to two separated inner volumes of a container or to two different containers.

Preferably, the fitment assembly of the invention is configured for injecting a high velocity jet into the one or plurality of containers through the at least one injection hole.

According to the present invention, the fitment assembly typically comprises a flexible cover over the at least one fluid inlet, this cover being piercable by appropriate means able to inject a fluid though the fluid inlet. It is also possible that the fitment assembly comprises a flexible cover overwrapping it, the moveable part of the fitment assembly comprising a sharpened area able to tear open when displacing the flexible cover in order to allow dispensing of the product through the dispensing outlet.

In a different embodiment of the invention, the fitment assembly comprises a flexible cover over the upper part of it and is provided with sharpened means able to tear open this upper flexible sheet when the two parts move relative to each other, so the communication between the inner volume of the container and the fitment assembly is opened.

In another embodiment of the invention, the two parts of the fitment assembly are linked to each other by means of a breakable and/or deformable part, allowing their relative movement.

According to a second aspect, the invention relates to a pack comprising a fitment assembly as the one described and at least one food or beverage container to which the fitment assembly is attached. The containers are typically configured by impermeable sheets joined to one another or by one impermeable sheet folded in half, defining an inner volume where a food or beverage ingredient is stored. Typically, the impermeable sheets overwrap the fitment assembly.

The pack of the invention typically comprises identification means with the information for processing the ingredients inside the one or plurality of containers such as temperature, flow and/or volume of the fluid introduced, preparation time, sequence of movements of the parts in the fitment assembly, for example.

According to a third aspect, the invention relates to a machine for preparing a food or beverage product from a pack as the one described, the machine comprising means designed for engaging with the fitment assembly and for injecting a fluid through the at least one fluid inlet.

In the machine of the invention, further means are provided configured to be able to move and/or displace the two parts of the fitment assembly relative to each other.

Preferably, the machine according to the present invention is configured to receive a pack as the one described in an essentially vertical position, injecting fluid into it in an upward direction.

The machine according to the invention typically further comprises control means to control the processing the ingredients inside the one or plurality of containers such as temperature, flow and/or volume of the fluid introduced, preparation time, sequence of movements of the parts in the fitment assembly, for example.

### Brief description of the drawings

Further features, advantages and objects of the present invention will become apparent for a skilled person when reading the following detailed description of non-limiting embodiments of the present invention, when taken in conjunction with the appended drawings, in which:
Fig. 1 shows a frontal view of a fitment assembly according to a possible embodiment of the present invention, showing two parts displaceable with respect to each other.
Fig. 2 shows a rear view of the fitment assembly of Figure 1.
Fig. 3 shows a frontal view of a fitment assembly according to a different possible embodiment of the present invention, showing two parts displaceable with respect to each other.
Fig. 4 shows a rear view of the fitment assembly of Figure 3.
Figs. 5a-b show respectively a frontal and a rear view of a fitment assembly according to a different possible embodiment of the present invention, showing two parts displaceable with respect to each other.
Figs. 6a-b show respectively a frontal and a rear view of a fitment assembly still according to a different possible embodiment of the present invention, showing two parts displaceable with respect to each other.
Figs. 7a-b show respectively a frontal and a rear view of a fitment assembly according to an alternative disclosure not covered by the claims, showing two parts displaceable with respect to each other.
Figs. 8a-b show respectively a frontal and a rear view of a fitment assembly according to still another different possible embodiment of the present invention, showing two parts displaceable with respect to each other.
Figs. 9a-b show respectively a frontal and a rear view of a fitment assembly according to a different embodiment of the present invention, showing two parts displaceable with respect to each other, dividing the sachet or pack in two different inner volumes or compartments.
Fig. 10 shows schematically a configuration of a pack comprising a flexible container and a fitment assembly attached to it.
Fig. 11 shows schematically the insertion of a pack according to the invention in a beverage preparation machine.
Fig. 12 shows schematically the insertion of a pack according to the invention in a beverage preparation machine, the pack being inserted frontally in the machine.
Fig. 13 shows schematically a beverage preparation machine according to the present invention.

### Detailed description of exemplary embodiments

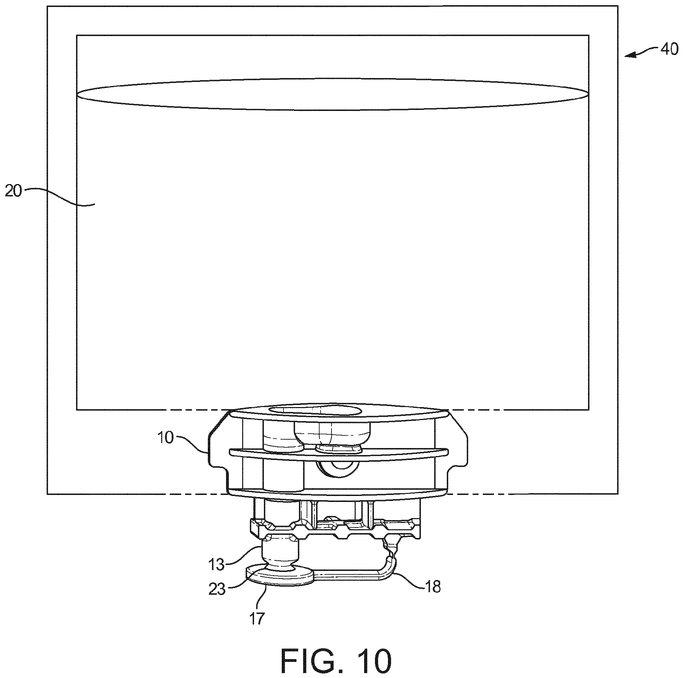

According to a first aspect, the present invention relates to a *fitment assembly 10* for being used with at least one food or beverage container 20 as shown schematically in Figure 10. This container 20 comprises at least one ingredient for the preparation of food or beverage product. When more than one container is used, typically each container comprises a different product or ingredient such that they are mixed in order to obtain a more complex product or beverage recipe preparation. The content of the containers can then be either sequentially or simultaneously prepared and dispensed through the fitment assembly 10.

According to the present invention the food or beverage ingredient of the container can be comprised within the list of: soups, fruit juices, vegetable juices, bouillons, coffee, chocolate, tea, milk or creamer, smoothies, purees, coulis, creams or a combination thereof. The food or beverage ingredient can be a soluble food or beverage ingredient. Preferably the food or beverage ingredient is a soluble food or beverage ingredient selected in the list of:
- instant coffee powder, milk powder, cream powder, instant tea powder, cocoa powder, soup powder, fruit powder or mixture of said powders,
- a coffee concentrate, a milk concentrate, a syrup, a fruit or vegetable concentrate, a tea concentrate, a fruit or vegetable puree.

The powders can be agglomerated or sintered. The powders or liquid concentrates can be mixed with solid pieces for example for preparing soups with solid pieces. The food or beverage ingredient can also be an infusable food or beverage ingredient like a roast and ground coffee or tea leaves. In that embodiment water extracts the infusable ingredient.

In the present invention fluid covers any aqueous diluent that can be mixed with a soluble beverage ingredient to prepare a beverage, like water, carbonated water, milk, etc. However, according to the invention, water is the preferred fluid which will be used.

The fitment assembly 10 of the invention comprises at least one fluid inlet 12 (typically arranged on a frontal side of the fitment assembly 10) through which a fluid, typically water, is injected, preferably by a needle arranged in a machine cooperating with the fitment assembly, as it will be further described. It is also possible and covered within the scope of the present invention to provide a fitment assembly comprising two fluid inlets, typically on the front and on the rear opposite side of the fitment, so that fluid can be injected reversibly on one side or the other of the said fitment assembly 10, or through both sides at the same time for a faster dissolution. Other embodiments of the fitment assembly of the invention comprise two frontal fluid inlets 12, 12' (as it will be further explained) to inject fluid into the container through two inner jets. Other configurations are also possible according to the invention.

Through the at least one fluid inlet 12 a fluid is supplied into the food or beverage container 20 in order to properly mix the ingredients with the fluid injected to prepare the corresponding food or beverage product.

The fitment assembly 10 also comprises at least one dispensing outlet 13 through which the food product or beverage is dispensed. The dispensing outlet 13 is preferably configured so that it delivers the product as a free flow, meaning that the product can flow from the dispensing outlet 13 preferably by simple gravity fall. According to a preferred embodiment of the invention, the dispensing outlet 13 comprises an opening 23 at the bottom of the fitment assembly 10, said opening 23 having a transverse section with a surface area equivalent to the surface of a circular surface of diameter of at least 1 mm, preferably at most 4 mm, even more preferably comprised between 1.5 and 3 mm. The dispensing outlet 13 is typically configured as a straight tube oriented essentially vertically in the fitment assembly 10, comprising at its end an opening 23. The length of the tube is preferably of at least 5 mm. Such a length generally enables a finalisation of the froth of the product, typically a beverage, before it is delivered in a drinking cup. An advantage of the dispensing outlet 13 of the present invention is that there is no need to implement a particular connection of it and the machine when a beverage is for example produced, in order to direct the flow of the beverage delivered at the dispensing outlet 13: the beverage can flow from the dispensing outlet 13 directly into a drinking cup.

The fitment assembly 10 is preferably rigid and is made of a rigid plastic material, preferably by injection moulding. Typically, this plastic material can be selected from the following: polypropylene, polyethylene, polyethylene terephthalate and polylactic acid. Also according to a less preferred embodiment the fitment assembly 10 can be made of a metal like aluminium or tin-plate.

Preferably, the fluid inlet 12 is piercable by injecting and piercing means 30, preferably a fluid needle, called in what follows needle, such that these injecting and piercing means 30 typically comprise an inner duct or pipe through which high pressure fluid is injected in the fluid inlet 12. However, it is also possible that the fluid inlet 12 is directly accessible by injecting means which will inject fluid directly without the need to pierce any external lid or membrane. As it will be further explained in more detail, the preferred configuration of the invention is that a flexible sheet of material which configures the container 20 is also arranged covering the fluid inlet 12, this sheet being then pierced by the needle as it has just been described.

Preferably, fluid is injected at a pressure higher than 2 bars, more preferably higher than 3 bars, preferably comprised between 2 and 10 bars, more preferably of around 7 bars. The fluid inlet 12 is configured in such a way that the high pressure fluid injected through it by the injecting and piercing means 30 is converted into a high velocity jet, which is driven into the container or containers. Typically, the diameter of the fluid inlet is comprised between 1 mm and 4 mm, more preferably between 1.5 mm and 3 mm and comprises a yieldably cover over it which can be pierced by the injecting and piercing means 30. The injecting and piercing means 30 also typically comprise a toroidal ring, preferably made of rubber, ensuring that there is no leakage of fluid outside the fluid inlet while the injecting and piercing means 30 are injecting fluid into the fluid inlet. The fluid inlet 12 is communicated with the inside volume of the container through at least one injection hole 14, having a diameter of at most 1 mm, preferably of at least 0.24 mm, preferably comprised between 0.3 mm and 1 mm, preferably between 0.3 and 0.5 mm, more preferably of about 0.4 mm. With such a configuration, when high pressure fluid is injected by the injecting and piercing means 30 through the fluid inlet 12, it is conveyed internally towards the injection hole 14, from which it is converted into a high velocity jet of fluid injected inside the container 20 when passing through the small section injection hole. Typically, this jet of fluid provided in the container has a velocity of at least 20 m/s.

According to the invention, the fluid inlet can also be configured for providing an orientable high velocity jet into the container, preferably at about 90° with respect to the fluid supply provided into the fluid inlet by the injecting and piercing means 30, though any other angle would be possible and comprised within the scope of the present application.

As described, the fluid inlet 12 together with the injection hole 14 in the fitment assembly 10 are configured for introducing the fluid under the form of a jet in the inner volume of the container 20. By jet it is understood a stream of liquid or fluid that comes out of the fluid inlet and into the inner volume of the food or beverage container quickly and with force. The fluid inlet 12 is configured for introducing fluid in the inner volume of the container with a high velocity, this fluid jet preferably presenting a velocity of at least about 20 m/s, preferably at least 30 m/s. As previously described, such a configuration is preferably obtained in the present invention by placing a constriction (that of the injection hole 14) in the fluid path in the fluid inlet to reduce the size of the section of the fluid inlet. Due to the small surface of the injection hole 14 through which the fluid goes into the inner volume of the container 20, the pressurized fluid creates a jet in the inner volume of the container.

For the same fluid to be provided through the fluid inlet 12, the surface of the injection hole 14 can vary according to the nature of the food and beverage ingredient inside the container which is to be mixed with the fluid. In particular when the ingredient is difficult to dissolve a smaller injection hole creates a jet with a higher velocity which improves agitation and dissolution of this ingredient in the container.

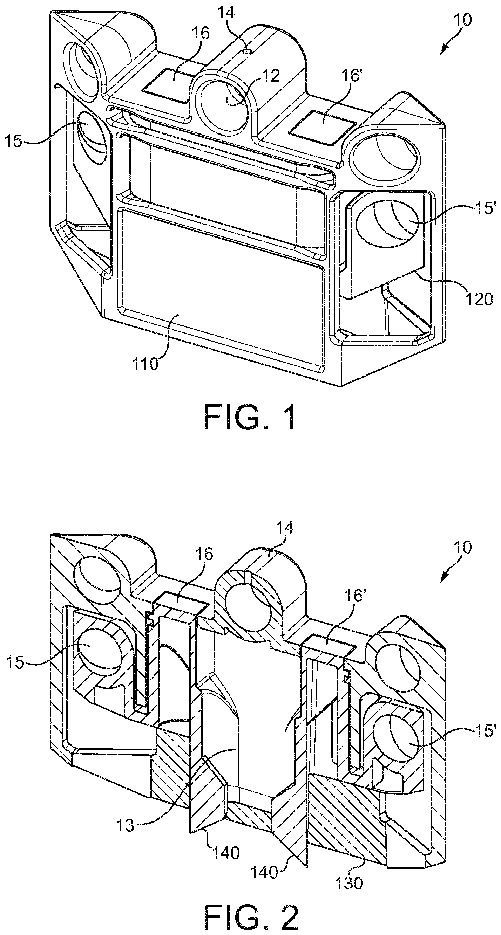

*Figures 1 and* 2 show a possible embodiment or execution of a fitment assembly 10 according to the invention. This fitment assembly 10 comprises two parts, a primary part 110 and a secondary part 120, moveable relative to each other, in particular displaceable, preferably linearly displaceable, with respect to each other. Typically, the primary part 110 is stationary while the secondary part 120 is displaceable with respect to the part 110. By the configuration of the secondary part 120, when it moves with respect to the primary part 110, which remains preferably static, the dispensing outlet opens and/or closes, therefore allowing a control of the preparation and dispensing process.

Referring now to Figures 1 and 2, the fitment assembly comprises a fluid inlet 12 connected to the inner volume of the container 20 through an injection hole 14. Typically, in this configuration, the fitment assembly is completely overwrapped by a flexible sheet configuring the container 20, also contouring the lower part 130 of the fitment assembly. Therefore, the dispensing outlet 13 (as shown in Figure 2) preferably comprises a sharpened part 140 on its lower side that is able to tear open the flexible film closing this lower part 130 when the secondary part 120 linearly displaces with respect to the primary part 110. Typically, the beverage preparation machine is further provided with means engaging with the fitment assembly 10 in displacing points 15 and 15' to connect and move vertically downwards the part 120 with respect to the part 110. By this vertical displacement of the secondary part 120 with respect to the primary part 110, two apertures 16 and 16' to the dispensing outlet 13 are opened allowing that the prepared beverage or product is delivered.

Typically, when the pack is received in a dedicated beverage preparation machine, means engage the fitment assembly through displacing points 15 and 15'; also, piercing and injecting means connect the fitment assembly 10 in the fluid inlet 12, piercing the external sheet of flexible material wrapped over the said fluid inlet 12. This makes that, when the film over the fluid inlet 12 is pierced, fluid is therefore injected and goes into the inner volume of the container 20 through the injection hole 14, allowing the dissolution and preparation of the beverage. Once the beverage is prepared, the means engaging the fitment assembly 10 move downwards vertically through the displacing points 15 and 15' the secondary part 120 with respect to the stationary primary part 110: thus, the two apertures 16 and 16' are opened allowing that the prepared beverage flows inside the part 120 through dedicated channels directing the beverage towards the dispensing outlet 13. By the vertical movement of the part 120, and because the dispensing outlet 13 is provided with sharpened means 140 on its lower side, the flexible sheet overwrapping the lower part 130 of the fitment assembly is opened and the beverage can be consequently dispensed.

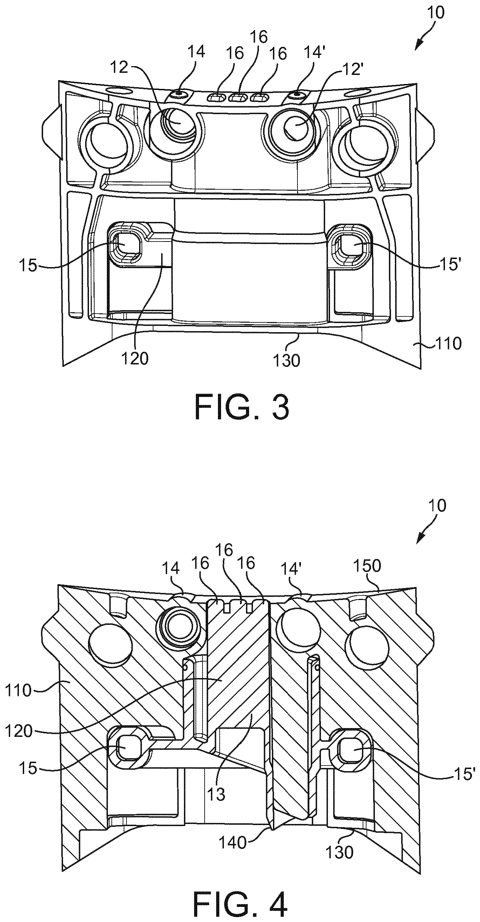

*Figures 3 and 4* show another possible embodiment or execution of a fitment assembly 10 according to the invention. The fitment assembly 10 again comprises two parts, 110 and 120, linearly displaceable with respect to each other. Typically, the fitment assembly 10 in this embodiment is also overwrapped by a flexible sheet, so first the piercing and injecting means in the beverage preparation machine pierce the film covering two fluid inlets 12 and 12', and start injecting fluid into the inner volume of the container 20 by means of respective injection holes 14 and 14'. Once the beverage is prepared, the means in the machine engaging with the fitment assembly 10 in displacing points 15 and 15' move vertically downwards the part 120 with respect to the part 110: this movement allows on one side that the apertures 16 are opened so the beverage can flow inside the secondary part 120 and into the dispensing outlet 13. By a sharpened part 140 at one end of the secondary part 120, when this part moves downwards, the film wrapping the lower part 130 is torn and opened, allowing exiting of the beverage through the dispensing outlet 13.

Another possible configuration (not shown in the Figures) is that the fitment assembly 10 is not completely overwrapped but over the fluid inlet(s) and over the upper part 150 of the fitment assembly 10. Therefore, first the piercing and injecting means pierce and inject fluid into the fluid inlet(s) 12, 12' and through respective injection hole(s) 14, 14'. Once the beverage is prepared, engaging means in the machine connecting the fitment assembly 10 in displacing points 15, 15' now arranged in the primary part 110 displace vertically downwards this primary part with respect to the secondary part. The secondary part 120 will be provided with sharpened means on the side facing the upper part 150, so the film over it will be torn open and apertures 16, 16' will allow dispensing of the beverage through the outlet 13.

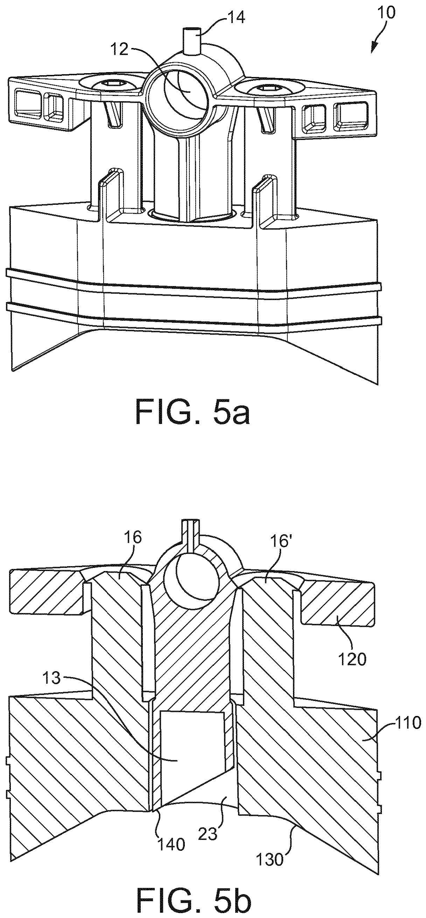

*Figures 5a and 5b* show a different possible embodiment or execution of a fitment assembly 10 according to the invention. The fitment assembly 10 comprises two parts moveable with respect to each other, linearly displaceable with respect to each other: piercing and injecting means first pierce the film over the fluid inlet 12 and then inject the fluid inside the container through a dedicated injection hole 14. Once the beverage has been mixed and prepared, by downwardly displacing the secondary part 120, the sharpened part 140 of it tears open the film over the lower part 130 of the fitment assembly 10 so the beverage can flow through the apertures 16 and 16' and into the dispensing outlet 13.

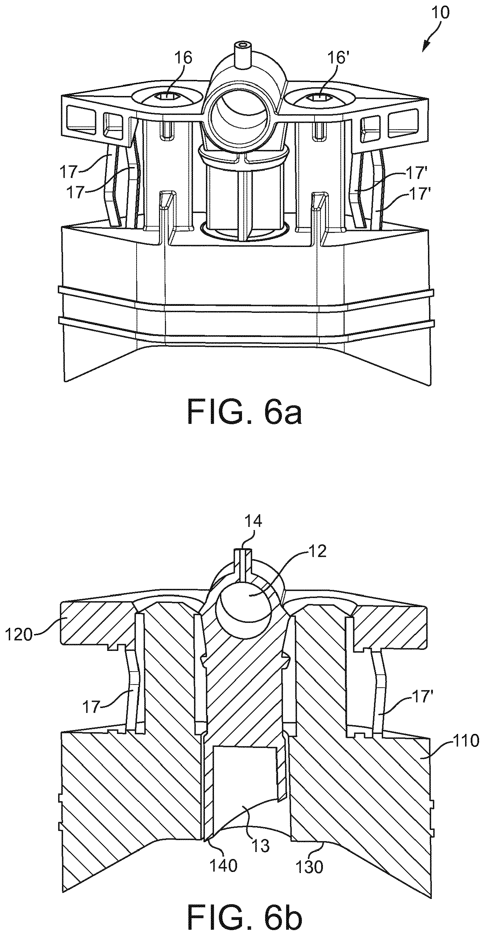

*Figures 6a and 6b* show a different possible embodiment or execution of a fitment assembly 10 according to the invention. The fitment assembly 10 initially comprises only one part that is converted into two parts which move relative to each other linearly for the beverage preparation. Initially, the fitment assembly is pierced in the fluid inlet 12 so fluid is injected through the injection hole 14 and into the inner volume of the container 20; the apertures 16 and 16' are closed and, when the parts 110 and 120 displace vertically with respect to each other, the apertures 16 and 16' are opened, breakable parts 17, 17' either break or deform to allow the mentioned displacement, and through the apertures 16 the beverage is diverted into the dispensing outlet 13. Similarly as in Figures 5a and 5b, the sharpened part 140 of the secondary part 120 tears open the film over the lower part 130 of the fitment assembly 10 so the beverage can flow through the apertures 16 and 16' and into the dispensing outlet 13.

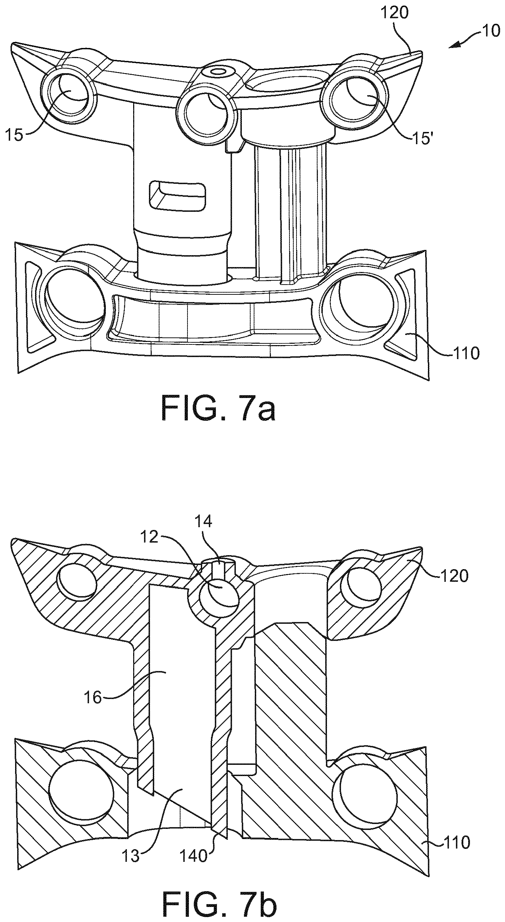

*Figures 7a and 7b* show a possible configuration of a fitment assembly according to an alternative disclosure: typically, the fitment is overwrapped so the piercing and injecting means first pierce the film over the fluid inlet 12 and then inject fluid through the injection hole 14 into the container 20. Once the beverage is prepared, the moveable part 120 displaces vertically with respect to the stationary part 110, and tears open the film over the lower part 130, leaving free the dispensing of the prepared beverage, coming from an aperture 16, through the dispensing outlet 13.

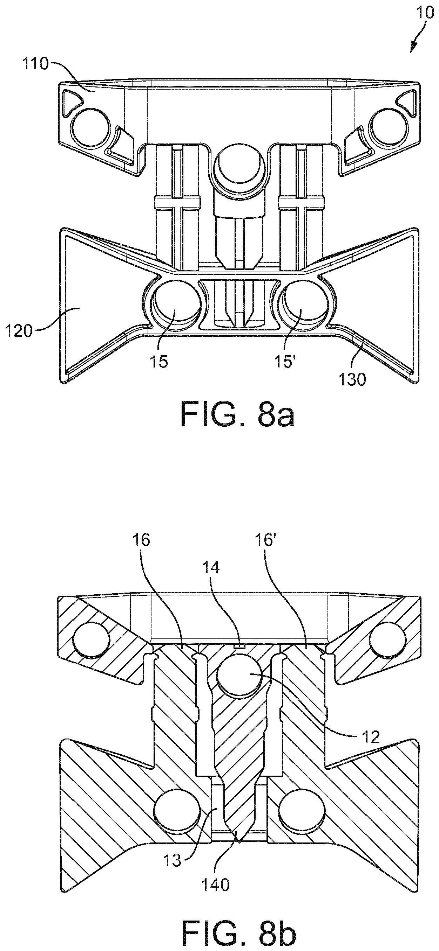

*Figures 8a and 8b* show another possible configuration of the fitment assembly 10 of the invention: the piercing and injecting means pierce the film over the fluid inlet 12 and then inject fluid through the injection hole 14 into the container. By displacement of the secondary part 120 with respect to the primary part 110, two actions are obtained: the apertures 16 and 16' are unblocked allowing the beverage to flow into the dispensing outlet 13 and the sharpened lower part 140 of the primary part 110 tears open the film overwrapping the lower part 130 of the fitment assembly 10, allowing dispensing of the prepared beverage.

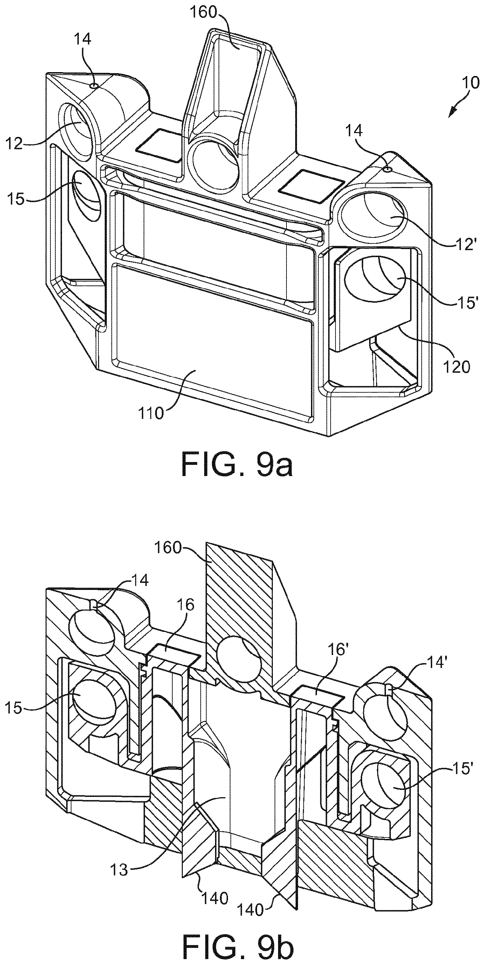

*Figures 9a and 9b* show a possible configuration of the fitment assembly 10 in which the primary part 110 comprises a separating wall 160 connecting with a middle sealing in the flexible sheets configuring the container 20, so two inner volumes in the container are obtained, with two different products, for example, that are advantageously separated in transport and preparation. Similarly to previous embodiments, the piercing and injecting means pierce the fluid inlets 12 and 12' and inject fluid into each container through respective injection holes 14 and 14'. When the secondary part 120 moves downwardly with respect to the primary part 110, the apertures 16 and 16' are unblocked, allowing the beverages coming from the two volumes of the container to enter the secondary part 110 and slow through the dispensing outlet 13. By the displacement of the part 120, its sharpened part 140 tears open the film overwrapping the lower part 130 thus allowing exiting and delivery of the beverage.

In the embodiments described, once the delivery of the beverage ends, the moveable part 120 can go back to its first positioning, thus closing again the communication with the inner volume of the container, typically the apertures 16 and 16' allowing that, when the pack is removed from the preparation machine, no dripping occurs.

Even when not shown in the Figures, another possibility is not to have the fitment assembly overwrapped, but the lower part of it having the dispensing outlet 13 closed by a plug 17, as represented schematically in Figure 10. The plug 17 comprises means for maintaining it attached to the fitment assembly 10 after the opening of the dispensing outlet 13. Consequently the plug 17 does not fall in the beverage or food during its production. The means for maintaining the plug 17 attached to the fitment assembly 10 can be a plastic bond 18 attached to the fitment assembly 10, for example, or any other suitable means providing a similar effect. Moreover, the dispensing outlet 13 can also comprise a weakened area near the plug 17: this weakened area can be made for example as a narrowing of the dispensing outlet tube so that it is easier to cut or tear off the plug 17 by the machine.

Preferably the plug 17 is part of one single fitment assembly 10 comprising the dispensing outlet and the fluid inlet. In particular when the fitment assembly 10 is made by injection moulding, the design of the mould also comprises the plug 17. In the same manner the plastic bond 18 can also be part of the design of the fitment assembly 10 when it is made by injection moulding, which again provides advantages from a manufacturing point of view, as the same part comprises the fluid inlet, the plug 17 and the bond 18.

According to a second aspect, the invention also refers to *a pack 40* comprising a fitment assembly 10 as the one described previously, and at least one food or beverage container 20 to which the fitment assembly 10 is attached, as it is represented in Figure 10, for example. Different sizes of the pack 40, can be used in a same machine adapted to store different quantities of ingredients: typically, it is the configuration of the fitment assembly 10 as to external shape and piercing requirements of the fluid inlet what determines the machine to use; however, the size of the containers, when extending vertically, does not determine or limit the machine. As a consequence, it becomes possible to produce different products, such as for example a cup of espresso coffee or a bowl of soup. The external design and configuration of the fitment assembly 10 will remain unchanged independently on the product targeted; however, the internal design of the fitment assembly 10, in particular as to the diameter of the injection hole or holes will differ as a function of the ingredient to be processed and therefore as a function of the food or beverage product targeted. Also, other parameters such as the flow rate of fluid injected and/or the temperature of the fluid injected and/or the total volume of fluid injected, will be modified as a function of the ingredient to be processed and therefore as a function of the food or beverage product targeted.

The food or beverage container 20 configuring the pack 40 preferably comprises two flexible water impermeable sheets joined to one another to define an inner volume where at least one ingredient is stored. Preferably, the food or beverage container presents an essentially plane shape, wherein the fitment assembly 10 is arranged on one of the sides of the pack 40. Preferably the pack itself is substantially flexible and looks like a pouch or sachet. By flexible, it is meant that the sheets can be bent easily. The resulting pack 40 can be bent also, as being soft and can be deformed contrary to rigid containers. The flexible sheet material can be plastic laminates, metallised foil or alufoil or fibre base material. According to the invention the two flexible water impermeable sheets can be formed of one single flexible water impermeable sheet folded in half and joined at its free edges.

The pack 40 can also comprise an excrescence enabling the handling of the pack 40 by the user or consumer: this has not been shown in the Figures attached, though.

Typically, the two flexible water impermeable sheets joined to one another to define the inner volume of the container are formed of one single flexible water impermeable sheet folded in half and joined at its free edges. According to said mode the container is a plane pouch made of a flexible material sheet, said sheet being folded at the top of the container and bonded on its edges to define the inner volume, the bottom bonded edge typically including the fitment assembly 10. This embodiment constitutes a particularly easy way to manufacture the pack 40 comprising the container and the fitment assembly since it requires the cutting of only one piece of sheet - most preferably according to a rectangular shape - and its folding to create the inner volume for the food or beverage ingredient. Typically, also for manufacturing convenience, the fitment assembly 10 is introduced in the bottom edge of the container during the sealing of its edges.

According to the invention, either the fitment assembly 10 and/or the food or beverage container 20 preferably comprise identification means (not shown) which comprise the information for the processing of the ingredients inside the container 20 and provide this information to appropriate control means in the machine. As already mentioned, this information can comprise for example the parameters in the preparation process, such as: temperature of the fluid introduced, flow and total volume of the fluid, preparation time, sequences of relative movement of primary and secondary parts in the fitment assembly, etc.

These identification means can comprise any kind of recognition means such as, for example, mechanical codes, optical codes, RFID tags, bar codes, magnetic codes, or the like. These identification means can also be made as detection holes arranged for example on one lateral edge of the food or beverage container, configured by the two flexible sheets brought together to conform the pouch or container, preferably on the sealing area of the container, where there is no product or ingredient. When the two sheets are brought together and are welded on the edges to configure a container, on one of these lateral edges, additional welding with circumferential shape will be provided, thus configuring the holes as punching holes. A plurality of holes will typically be provided vertically on one of the edges of the container brought together: these holes will allow light to pass through and, depending on the configuration of the holes, the machine will be provided with the information for the processing of the container that has to be followed. Because the packs 40 according to the present invention are made reversible, in order to allow the machine read the identification means independently on the sense in which the pack 40 has been introduced, these identification means, typically these detection holes or punched holes, will be provided on two lateral edges of the container. The identification means can also provide the machine with the information regarding the sense of introduction of the pack.

Preferably, according to the invention, the pack 40 presents a plane shape oriented along a plane essentially vertically oriented during beverage production and the fluid inlet orientates the jet of fluid in a direction comprised in said plane. The fluid jet introduced from the bottom into the container is developing into circular and spiral movements creating turbulences, frictions and high contact surfaces between the fluid molecules (typically, water molecules) and the ingredient particles. In average the fluid molecules have several turns within the container until they leave it together with the beverage or food product once mixed. Best results (reconstitution) have been observed with a pack of rectangular shape. Packs with single fitment assembly placed in the corner of a rectangular pack have also been found to improve reconstitution.

According to the invention, the food or beverage container is arranged essentially vertically during the production and dispensing of the product or beverage, and the fitment assembly 10 is arranged in such a way that the fluid coming through the fluid inlet 12 is supplied into the container 20 in an upward direction.

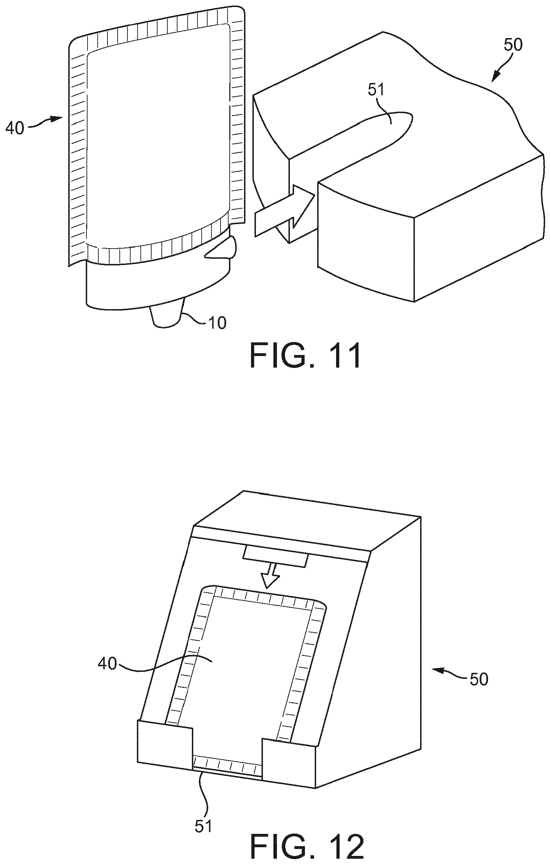

According to yet another aspect, the invention refers to *a machine 50* for preparing food or beverage products from a pack 40. The machine 50 comprises receiving means 51 adapted to accommodate the pack 40 preferably in such a way that the pack 40 is positioned vertically and the fitment assembly 10 is positioned at the bottom of the pack 40, and injecting means 30 (preferably also being piercing means) designed for engaging with the fitment assembly 10 and for injecting high pressure fluid inside the fluid inlet 12 of the fitment assembly 10. These injecting means 30 can also act as the means for displacing the part 120 with respect to the stationary part 110 (embodiments of Figures 5a-b, 6a-b, 7a-b for example) or separate displacing means will be provided in the machine 50 to effect such displacement of the part 120 (Figures 1-2, 3-4, 9a-b for example). Typically, as the pack 40 is processed to obtain the beverage or food product in an essentially vertical position in the machine 50, the pack 40 will be introduced either frontally in the machine 50 (as schematically represented in Figure 12) or laterally, so that the pack 40 is slidably inserted into a dedicated insert in the machine 50 (as schematically represented in Figure 11).

According to the present invention, the fluid can be supplied to the pack 40 at any temperature, cold, ambient or hot, depending on the type of food or beverage product targeted.

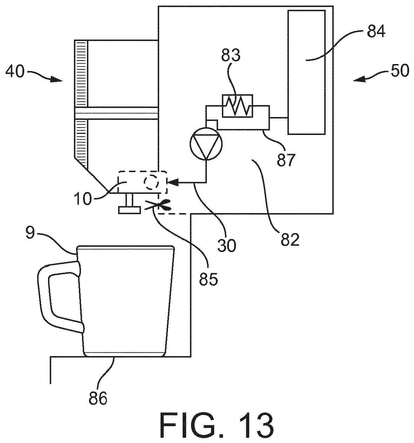

According to the invention and as schematically illustrated in Figure 13, a machine 50 for preparing food or beverage products from a pack 40 as described previously comprises at least:
- a fluid supply or tank 84 and a pump 82 for supplying pressurized fluid to the fluid inlet 12;
- a heater 83 for eventually heating the fluid;
- a bypass line 87 for delivering fluid at ambient temperature;
- a valve (not illustrated) for the selection of either hot or ambient fluid,
- optionally, a cooling unit (not shown) can also be provided in the machine 50 for delivering cold fluid;
- injecting means, preferably piercing and injecting means 30, more preferably a fluid needle, piercing the cover over the fluid inlet 12 and injecting the pressurized fluid coming from the fluid supply into the fluid inlet; these means can also act as displacing means for the part 120 or separate displacing means (not shown) will be provided in the machine;
- a device 85 for cutting or tearing the plug 17 from the dispensing outlet 13 (optional, in case the fitment assembly is not overwrapped);
- control means (not shown) to control the process parameters and/or the movement of the part 120 with respect to part 110.

The machine 50 can also comprise a data reader, preferably comprising an optical device, which reads and retrieves the information from the identification means regarding the process parameters to be used for preparing the food or beverage product from the pack 40 and sends it to the control means. Preferably, the data reader will retrieve the information from the identification means in the pack 40 by a light emitter device emitting light passing through punched holes configuring in a preferred embodiment the identification means.

Preferably the machine further comprises a positioning area 86 for allocating a drinking cup 9 under the dispensing outlet of the pack 40 when a food product or a beverage is prepared.

The present invention presents the advantage of proposing packs for the preparation of food or beverages wherein a broad range of different foods and beverages can be produced with the same machine. Further, with a fitment assembly as the one shown in Figures 9a-b, two inner volumes in the container 20 can be separated so different products can be arranged in them and not be processed until the beverage is going to be prepared. The foods and beverages can differ by their nature (coffee, tea, chocolate, soup, etc.), by their aspect (presence of foam for coffee, of foam for milk and chocolate, absence of bubbles for tea, etc.), by their volume (from espresso volume up to soup volume) and still be obtained by the same machine. The machine elements can remain very simple and limited to a simple fluid needle, typically a simple water needle.

The present invention presents the advantage of proposing a consumer friendly preparation of foods and beverages. The beverage of food delivered from the pack is ready to be served and does not require any additional process step, for example for foaming the beverage.

The present invention also presents the advantage of proposing packs wherein the ingredients are fully protected from atmosphere before use.

The present invention presents the advantage of proposing packs for preparing beverages or food products wherein the contact of ingredients and prepared beverage or food product with the machine is avoided and the risk of cross contamination is therefore limited. The prepared beverages or food products present optimal organoleptic properties.

The present invention further presents the advantage of proposing packs presenting a low environmental impact since they can be made of a laminated pouch with a small insert piece (fitment assembly) of plastic.

The present invention presents the advantage of proposing packs which can be very easily produced starting from flexible sheets and one single fitment assembly inserted. In particular the pack usually does not comprise an internal filter or membrane to be positioned in the inner volume during manufacturing.

The space needed for storing the packs according to the invention, is clearly much less than that for typical capsule containers, for example.

Also, as previously described, the configuration of the fitment assembly of the invention provides advantages, such as described below.
- Because the initial configuration of the fitment assembly is such that the dispensing outlet is closed, the risk that the ingredient arranged inside the inner volume of the container 20, which is typically configured as a powder, gets introduced inside the fitment assembly 10 and can either block an injection hole for example or can be introduced in the dispensing outlet so that when the product is delivered, the first thing dispensed is unprocessed (undissolved) powder is avoided.
- Because the dispensing outlet 13 is typically blocked while the food product or beverage is being prepared, the dissolution is improved inside the container.
- Dripping of remaining product from the pack when it is removed from the machine once the preparation of the food product or beverage has ended is also avoided, as the end position of the fitment assembly is such that both the dispensing outlet and the one or more injection holes are closed.

Although the present invention has been described with reference to preferred embodiments thereof, many modifications and alternations may be made by a person having ordinary skill in the art without departing from the scope of this invention which is defined by the appended claims.

## Claims

1. A fitment assembly (10) for one or a plurality of food or beverage containers (20), each container comprising at least one ingredient for the preparation of a food or beverage product, the fitment assembly (10) comprising at least one fluid inlet (12) connected to the inner volume of the container (20) through at least one injection hole (14) through which a fluid can be supplied into the food or beverage containers, and at least one dispensing outlet (13) through which the food or beverage product is dispensed; **characterized in that** the fitment assembly (10) comprises two parts relatively moveable with respect to each other such that this relative movement opens or closes the communication of the inner volume of the containers with two apertures (16, 16') allowing that the prepared beverage flows through dedicated channels in the fitment assembly (10) directing the beverage towards the dispensing outlet (13).

2. Fitment assembly (10) according to claim 1 comprising a primary part (110) stationary and a secondary part (120) substantially vertically displaceable with respect to the primary part (110).

3. Fitment assembly (10) according to claim 2 wherein the fluid inlet (12) is arranged in the primary part (110) and communicates through an injection hole (14) with the inner volume of the container (20).

4. Fitment assembly (10) according to any of claims 2-3 wherein the primary part (110) comprises two fluid inlets (12, 12'), each communicating through a respective injection hole (14, 14') with the inner volume of the container (20), sequentially and/or simultaneously actuated as a function of the type of product prepared.

5. Fitment assembly (10) according to claim 4 wherein the fluid inlets (12, 12') are reversibly positioned.

6. Fitment assembly (10) according to any of the previous claims further comprising a separating wall (160) to allow connection to two separated inner volumes of a container (20) or to two different containers.

7. Fitment assembly (10) according to any of the previous claims configured for injecting a high velocity jet into the one or plurality of containers through the at least one injection hole.

8. Fitment assembly (10) according to any of the previous claims comprising a flexible cover over the at least one fluid inlet, this cover being piercable by appropriate means able to inject a fluid though the fluid inlet.

9. Fitment assembly (10) according to any of claims 1-7 comprising a flexible cover overwrapping the fitment assembly, the moveable part of the fitment assembly comprising a sharpened area able to tear open when displacing the flexible cover in order to allow dispensing of the product through the dispensing outlet (13).

10. Fitment assembly (10) according to any of claims 1-7 comprising a flexible cover over the upper part of the fitment assembly; the fitment assembly being provided with sharpened means able to tear open this upper flexible sheet when the two parts move relative to each other, so the communication between the inner volume of the container and the fitment assembly is opened.

11. Fitment assembly (10) according to any of the previous claims wherein the two parts are linked to each other by means of a breakable and/or deformable part, allowing their relative movement.

12. A pack (40) comprising a fitment assembly (10) according to any of claims 1-11 and at least one food or beverage container (20) to which the fitment assembly (10) is attached.

13. Pack (40) according to claim 12 wherein the containers (20) are configured by impermeable sheets joined to one another or by one impermeable sheet folded in half, defining an inner volume where a food or beverage ingredient is stored.

14. Pack (40) according to claim 13 wherein the impermeable sheets overwrap the fitment assembly (10).

15. Pack (40) according to any of claims 12-14 comprising identification means with the information for processing the ingredients inside the one or plurality of containers (20) such as temperature, flow and/or volume of the fluid introduced, preparation time, sequence of movements of the parts in the fitment assembly (10), for example.

16. Machine (50) for preparing a food or beverage product from a pack (40) according to any of claims 12-15, the machine comprising means (30) designed for engaging with the fitment assembly (10) and for injecting a fluid through the at least one fluid inlet (12), wherein further means are provided configured to be able to move and/or displace the two parts of the fitment assembly (10) relative to each other.

17. Machine (50) according to claim 16 configured to receive a pack (40) according to any of claims 12-15 in an essentially vertical position, injecting fluid into it in an upward direction.

18. Machine (50) according to any of claims 16-17 further comprising control means to control the processing the ingredients inside the one or plurality of containers (20) such as temperature, flow and/or volume of the fluid introduced, preparation time, sequence of movements of the parts in the fitment assembly (10), for example.

## Patentansprüche

1. Einbauanordnung (10) für einen oder eine Vielzahl von Lebensmittel- oder Getränkebehältern (20), wobei jeder Behälter mindestens einen Inhaltsstoff für die Zubereitung eines Lebensmittel- oder Getränkeprodukts umfasst, wobei die Einbauanordnung (10) mindestens einen Flüssigkeitseinlass (12), der mit dem Innenvolumen des Behälters (20) durch mindestens ein Einspritzloch (14) verbunden ist, durch welches eine Flüssigkeit in die Lebensmittel- oder Getränkebehälter eingebracht werden kann, und mindestens einen Ausgabeauslass (13) umfasst, durch den das Lebensmittel- oder Getränkeprodukt abgegeben wird;
**dadurch gekennzeichnet, dass** die Einbauanordnung (10) zwei Teile umfasst, die relativ zueinander bewegbar sind, so dass diese Relativbewegung die Verbindung des Innenvolumens der Behälter mit zwei Öffnungen (16,16') öffnet oder schließt, wodurch ermöglicht wird, dass das zubereitete Getränk durch dedizierte Kanäle in der Einbauanordnung (10) fließt, die das Getränk zum Abgabeauslass (13) leiten.

2. Einbauanordnung (10) nach Anspruch 1, umfassend einen feststehenden Primärteil (110) und einen Sekundärteil (120), der im Wesentlichen vertikal zum Primärteil (110) verschiebbar ist.

3. Einbauanordnung (10) nach Anspruch 2, wobei der Flüssigkeitseinlass (12) im Primärteil (110) angeordnet ist und durch ein Einspritzloch (14) mit dem Innenvolumen des Behälters (20) in Verbindung steht.

4. Einbauanordnung (10) nach einem der Ansprüche 2 bis 3, wobei der Primärteil (110) zwei Flüssigkeitseinlässe (12, 12') umfasst, die jeweils durch ein entsprechendes Einspritzloch (14, 14') mit dem Innenvolumen des Behälters (20) in Verbindung stehen, wobei sie in Abhängigkeit von der Art des zubereiteten Produkts nacheinander und/oder gleichzeitig betätigt werden.

5. Einbauanordnung (10) nach Anspruch 4, wobei die Flüssigkeitseinlässe (12, 12') umkehrbar positioniert sind.

6. Einbauanordnung (10) nach einem der vorstehenden Ansprüche, ferner umfassend eine Trennwand (160), um eine Verbindung zu zwei getrennten Innenvolumina eines Behälters (20) oder zu zwei verschiedenen Behältern zu ermöglichen.

7. Einbauanordnung (10) nach einem der vorstehenden Ansprüche, die zum Einspritzen eines Hochgeschwindigkeitsstrahls in den einen oder die Vielzahl von Behältern durch das mindestens eine Einspritzloch konfiguriert ist.

8. Einbauanordnung (10) nach einem der vorstehenden Ansprüche, umfassend eine flexible Abdeckung über dem mindestens einen Fluideinlass, wobei diese Abdeckung durch geeignete Mittel durchstochen werden kann, die in der Lage sind, ein Fluid durch den Fluideinlass einzuspritzen.

9. Einbauanordnung (10) nach einem der Ansprüche 1 bis 7, umfassend eine flexible Abdeckung, welche die Einbauanordnung umhüllt, wobei der bewegbare Teil der Einbauanordnung einen geschärften Bereich umfasst, der in der Lage ist, die flexible Abdeckung aufzureißen, wenn diese verschoben wird, um die Abgabe des Produkts durch den Abgabeauslass (13) zu ermöglichen.

10. Einbauanordnung (10) nach einem der Ansprüche 1 bis 7, umfassend eine flexible Abdeckung über dem oberen Teil der Einbauanordnung; wobei die Einbauanordnung mit geschärften Mitteln versehen ist, die in der Lage sind, diese obere flexible Folie aufzureißen, wenn sich die zwei Teile relativ zueinander bewegen, so dass die Verbindung zwischen dem Innenvolumen des Behälters und der Einbauanordnung geöffnet wird.

11. Einbauanordnung (10) nach einem der vorstehenden Ansprüche, wobei die zwei Teile durch einen brechbaren und/oder verformbaren Teil miteinander verbunden sind, wodurch ihre relative Bewegung ermöglicht wird.

12. Packung (40), umfassend eine Einbauanordnung (10) nach einem der Ansprüche 1 bis 11 und mindestens einen Lebensmittel- oder Getränkebehälter (20), an dem die Einbauanordnung (10) befestigt ist.

13. Packung (40) nach Anspruch 12, wobei die Behälter (20) durch miteinander verbundene undurchlässige Folien oder durch eine undurchlässige, in der Hälfte gefaltete Folie konfiguriert sind, wodurch ein Innenvolumen definiert ist, in dem ein Nahrungsmittel- oder Getränkeinhaltsstoff aufbewahrt ist.

14. Packung (40) nach Anspruch 13, wobei die undurchlässigen Folien die Einbauanordnung (10) umhüllen.

15. Packung (40) nach einem der Ansprüche 12 bis 14, umfassend Kennzeichnungsmittel mit den Informationen für die Verarbeitung der Inhaltsstoffe in dem einen oder der Vielzahl von Behältern (20), beispielsweise Temperatur, Strömung und/oder Volumen der eingebrachten Flüssigkeit, Zubereitungszeit, Bewegungsabfolge der Teile in der Einbauanordnung (10).

16. Maschine (50) für die Zubereitung eines Lebensmittel- oder Getränkeprodukts aus einer Packung (40) nach einem der Ansprüche 12 bis 15, wobei die Maschine Mittel (30) umfasst, die dazu ausgebildet sind, mit der Einbauanordnung (10) in Eingriff zu treten und eine Flüssigkeit durch den mindestens einen Flüssigkeitseinlass (12) einzuspritzen, wobei weitere Mittel vorgesehen sind, die so konfiguriert sind, dass sie in der Lage sind, die zwei Teile der Einbauanordnung (10) relativ zueinander zu bewegen und/oder zu verschieben.

17. Maschine (50) nach Anspruch 16, die dazu konfiguriert ist, eine Packung (40) nach einem der Ansprüche 12 bis 15 in einer im Wesentlichen vertikalen Position aufzunehmen, wobei sie Flüssigkeit in einer Aufwärtsrichtung in sie einspritzt.

18. Maschine (50) nach einem der Ansprüche 16 bis 17, ferner umfassend Steuerungsmittel zum Steuern der Verarbeitung der Inhaltsstoffe in dem einen oder der Vielzahl von Behältern (20), wie zum Beispiel Temperatur, Strömung und/oder Volumen der eingebrachten Flüssigkeit, Zubereitungszeit, Bewegungsabfolge der Teile in der Einbauanordnung (10).

## Revendications

1. Ensemble accessoire (10) pour un ou une pluralité de récipients à aliment ou boisson (20), chaque récipient comprenant au moins un ingrédient pour la préparation d'un produit alimentaire ou de boisson, l'ensemble accessoire (10) comprenant au moins une entrée de fluide (12) reliée au volume interne du récipient (20) par l'intermédiaire d'au moins un trou d'injection (14) par l'intermédiaire duquel un fluide peut être alimenté dans les récipients à aliment ou boisson, et au moins une sortie de distribution (13) par l'intermédiaire de laquelle le produit alimentaire ou de boisson est distribué ;
**caractérisé en ce que** l'ensemble accessoire (10) comprend deux parties relativement mobiles l'une par rapport à l'autre de telle sorte que ce mouvement relatif ouvre ou ferme la communication du volume interne des récipients avec deux ouvertures (16, 16') permettant que la boisson préparée s'écoule à travers des canaux dédiés dans l'ensemble accessoire (10) dirigeant la boisson en direction de la sortie de distribution (13).

2. Ensemble accessoire (10) selon la revendication 1 comprenant une partie primaire (110) stationnaire et une partie secondaire (120) déplaçable de manière essentiellement verticale par rapport à la partie primaire (110).

3. Ensemble accessoire (10) selon la revendication 2 dans lequel l'entrée de fluide (12) est agencée dans la partie primaire (110) et communique par l'intermédiaire d'un trou d'injection (14) avec le volume interne du récipient (20).

4. Ensemble accessoire (10) selon l'une quelconque des revendications 2 ou 3 dans lequel la partie primaire (110) comprend deux entrées de fluide (12, 12'), communiquant chacune par l'intermédiaire d'un trou d'injection respectif (14, 14') avec le volume interne du récipient (20), actionnées séquentiellement et/ou simultanément en fonction du type de produit préparé.

5. Ensemble accessoire (10) selon la revendication 4 dans lequel les entrées de fluide (12, 12') sont positionnées de manière réversible.

6. Ensemble accessoire (10) selon l'une quelconque des revendications précédentes comprenant en outre une paroi de séparation (160) pour permettre une liaison à deux volumes internes séparés d'un récipient (20) ou à deux récipients différents.

7. Ensemble accessoire (10) selon l'une quelconque des revendications précédentes configuré pour injecter un jet à grande vitesse dans le ou la pluralité de récipient(s) par l'intermédiaire de l'au moins un trou d'injection.

8. Ensemble accessoire (10) selon l'une quelconque des revendications précédentes comprenant un couvercle flexible par-dessus l'au moins une entrée de fluide, ce couvercle pouvant être percé par un moyen approprié apte à injecter un fluide à travers l'entrée de fluide.

9. Ensemble accessoire (10) selon l'une quelconque des revendications 1 à 7 comprenant un couvercle flexible recouvrant l'ensemble accessoire, la partie mobile de l'ensemble accessoire comprenant une zone effilée apte à s'ouvrir par déchirement lorsqu'on déplace le couvercle flexible afin de permettre la distribution du produit à travers la sortie de distribution (13).

10. Ensemble accessoire (10) selon l'une quelconque des revendications 1 à 7 comprenant un couvercle flexible par-dessus la partie supérieure de l'ensemble accessoire ; l'ensemble accessoire étant pourvu d'un moyen aiguisé apte à ouvrir par déchirement cette feuille flexible supérieure lorsque les deux parties bougent l'une par rapport à l'autre, de sorte que la communication entre le volume interne du récipient et l'ensemble accessoire est ouverte.

11. Ensemble accessoire (10) selon l'une quelconque des revendications précédentes dans lequel les deux parties sont reliées l'une à l'autre au moyen d'une partie cassable et/ou déformable, permettant leur mouvement relatif.

12. Emballage (40) comprenant un ensemble accessoire (10) selon l'une quelconque des revendications 1 à 11 et au moins un récipient à aliment ou boisson (20) auquel l'ensemble accessoire (10) est fixé.

13. Emballage (40) selon la revendication 12 dans lequel les récipients (20) sont configurés par des feuilles imperméables jointes les unes aux autres ou par une feuille imperméable pliée en deux, définissant un volume interne où un ingrédient d'aliment ou de boisson est stocké.

14. Emballage (40) selon la revendication 13 dans lequel les feuilles imperméables recouvrent l'ensemble accessoire (10).

15. Emballage (40) selon l'une quelconque des revendications 12 à 14 comprenant un moyen d'identification avec les informations pour le traitement des ingrédients à l'intérieur du ou de la pluralité de récipient(s) (20) telles que la température, le débit et/ou le volume du fluide introduit, le temps de préparation, la séquence de mouvements des parties dans l'ensemble accessoire (10), par exemple.

16. Machine (50) pour la préparation d'un produit alimentaire ou de boisson à partir d'un emballage (40) selon l'une quelconque des revendications 12 à 15, la machine comprenant un moyen (30) conçu pour venir en prise avec l'ensemble accessoire (10) et pour injecter un fluide à travers l'au moins une entrée de fluide (12), dans lequel des moyens supplémentaires sont fournis configurés pour être aptes à faire bouger et/ou déplacer les deux parties de l'ensemble accessoire (10) l'une par rapport à l'autre.

17. Machine (50) selon la revendication 16 configurée pour recevoir un emballage (40) selon l'une quelconque des revendications 12 à 15 dans une position sensiblement verticale, injecter un fluide dans celui-ci dans une direction vers le haut.

18. Machine (50) selon l'une quelconque des revendications 16 ou 17 comprenant en outre un moyen de commande pour commander le traitement des ingrédients à l'intérieur du ou de la pluralité de récipients (20) tel que la température, le débit et/ou le volume du fluide introduit, le temps de préparation, la séquence de mouvements des parties dans l'ensemble accessoire (10), par exemple.
